# EUROPEAN PATENT SPECIFICATION

(11) **EP 3 716 463 B1**
(45) Date of publication and mention of the grant of the patent: **20.09.2023**
(21) Application number: 18881549.2
(22) Date of filing: 12.11.2018
(51) Int. Cl.: B60L 3/04, H02M 1/36, H02M 7/00, B60L 9/18

(54) **CURRENT REDUCTION DEVICE**
STROMREDUZIERUNGSVORRICHTUNG
DISPOSITIF DE RÉDUCTION DE COURANT

(30) Priority: 22.11.2017 JP 2017224662
(43) Date of publication of application: 30.09.2020
(73) Proprietor: Hitachi, Ltd., Tokyo 100-8280 (JP)
(72) Inventor: ANDO, Masato, Tokyo 100-8280 (JP); AKIYAMA, Satoru, Tokyo 100-8280 (JP); NARUKI, Wataru, Tokyo 100-8280 (JP)
(74) Representative: MERH-IP Matias Erny Reichl Hoffmann Patentanwälte PartG mbB
(86) International application number: PCT/JP2018/041883
(87) International publication number: WO 2019/102896

(56) References cited:
- GB-A- 2 533 212
- JP-A- 2001 037 004
- JP-A- 2005 237 118
- JP-A- 2006 067 732
- JP-A- 2006 067 732
- JP-A- 2010 068 670

## Description

### Technical Field

The present invention relates to a current reduction device that is disposed between a line breaker and a power converter.

### Background Art

On the underfloor of a railway vehicle, a power converter and a filter reactor, which are driving electric devices, and further a signaling device, are installed. Nowadays, in order to improve the maintenability of rail cars, it is considered to install monitoring devices that grasp the degradation and failures of rail car devices or facilities. Since the underfloor space of the railway vehicle has limitations, in order to newly install these monitoring devices on the rail car, it is necessary to reduce the sizes of driving electric devices. In the power converter, an IGBT (Insulated Gate Bipolar Transistor) and a MOSFET (Metal-Oxide-Semiconductor Field-Effect Transistor), which are voltage drive power semiconductors, are applied. The power semiconductors including the IGBT and the MOSFET can reduce switching losses by a high-speed switching operation, and can reduce generated losses, and thus the cooler of the power converter can be reduced in size.

In order to reduce the size of a filter reactor, a reduction in its inductance value is effective. However, a reduction in the inductance value increases an electric current per unit time, the electric current flowing from an overhead contact line when the power converter is broken or when a ground fault occurs. Generally, this large electric current is interrupted by a mechanical device, such as a high speed circuit breaker. However, since a reduction in the inductance value increases the electric current per unit time, this leads to a concern that the allowable current in an electric power substation might be exceeded at the breaking speed of a mechanical circuit breaker. Therefore, it is considered that the combination of a semiconductor current limiter and a mechanical circuit breaker increases the breaking speed, compared with using a mechanical circuit breaker alone, and this enables the compatibility of a reduction in the inductance value of the filter reactor with a reduction in the breaking current.

As the background of the present technical field, there is Japanese Unexamined Patent Application Publication No. 2004-96877 (Patent Literature 1). This publication describes a power supply for an electric motor car, the power supply including a pantograph to which electric power is supplied from an overhead contact line, a contactor that is connected to the pantograph and that interrupts overhead contact line electric power supplied from the pantograph, an inverter that converts the overhead contact line electric power supplied through the contactor into three-phase alternating current electric power, a first resistor that is connected in series to the contactor, a second resistor that is connected in series to the first resistor and that has a resistance value higher than the resistance value of the first resistor, a first switching device that is connected in parallel to a series circuit composed of the first resistor and the second resistor, and a second switching device that is connected in parallel to the second resistor (see Abstract). Patent Literature 2 describes a vehicle controlling device comprising a circuit breaker, a reactor connected in series to this circuit breaker, a CVCF inverter, a charging resistor, a first semiconductor element, a current-reducing resistor, a second semiconductor element, and one gate drive circuit that controls the first and second semiconductors. Patent Literature 3 describes a power conversion device in which a plurality of semiconductor modules is connected in parallel to unify and reduce surge voltages resulting from parasitic inductances at the time of switching.

### Citation List

### Patent Literature

Patent Literature 1: Japanese Patent Application Laid-Open No. 2004-96877
Patent Literature 2: JP 2006 067732 A
Patent Literature 3: GB 2 533 212 A

### Summary of Invention

### Technical Problem

In Patent Literature 1, in the case in which the inverter causes an arm short circuit failure, the switching device is turned off, an overcurrent is decreased by the resistor, and the contactor is then opened to interrupt the fault current. Here, when the switching device is turned off, a surge voltage occurs due to the parasitic inductance of a wire that connects the switching device to the resistor. When this surge voltage exceeds the rated voltage of the switching device, the switching device is broken. In order to reduce the parasitic inductance that is a cause of the surge voltage, shortening the wire is effective. On the other hand, although the operating temperature of the resistor is 200°C or more, the operating temperature of the switching device is about 125°C. Thus, it is desirable to keep the distance between the resistor and the switching device apart from each other for thermal insulation.

An object of the present invention is to reduce a surge voltage due to the parasitic inductance of a wire that connects a switching device to a resister.

### Solution to Problem

In order to solve the object, the present invention is a current reduction device including: a switching device that is disposed between a line breaker configured to interrupt electric power supplied from a direct current overhead contact line to a power converter and the power converter, the switching device being configured to supply electric power from the line breaker to the power converter when the switching device is in on-operation; and a resister that is connected in parallel to the switching device through a plurality of wires. In the device, the plurality of wires includes a first wire configured to connect a high-potential side electrode of the switching device to one end of the resister, and a second wire configured to connect a low-potential side electrode of the switching device to another end of the resister; the first wire and the second wire are disposed opposite to each other being stacked; and through the first wire and the second wire, electric currents in reverse directions are carried when the switching device is transitioned from on to off.

### Advantageous Effects of Invention

According to the present invention, a surge voltage due to the parasitic inductance of a wire that connects a switching device to a resister can be reduced.

### Brief Description of Drawings

Fig. 1 is a schematic diagram of an electric motor car according to a first embodiment of the present invention.
Fig. 2 is a circuit block diagram showing the overall structure of a driving device according to the first embodiment of the present invention.
Fig. 3 is a circuit block diagram including the overall structure of the driving device and the equivalent circuit of a semiconductor current reduction device according to the first embodiment of the present invention.
Fig. 4 is a perspective view showing the mounting structure of the semiconductor current reduction device according to the first embodiment of the present invention.
Fig. 5 is a perspective view showing the mounting structure of a semiconductor current reduction device according to a second embodiment of the present invention.
Fig. 6 is a perspective view showing the mounting structure of a semiconductor current reduction device according to a third embodiment of the present invention.

### Description of Embodiments

In the following, embodiments will be described with reference to the drawings. Note that in the drawings and the embodiments, a MOSFET is taken as a switching device. However, the present invention is also applicable to an IGBT.

### First Embodiment

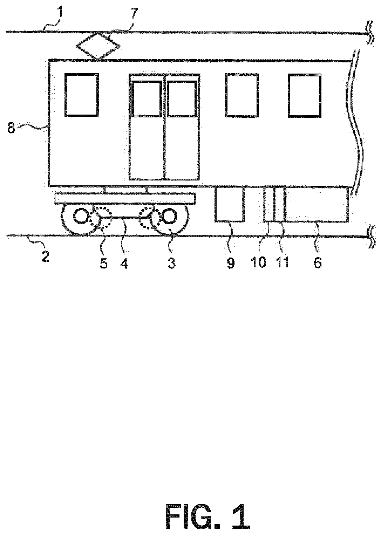

Fig. 1 is a schematic diagram of an electric motor car according to a first embodiment of the present invention. In Fig. 1, in a power running operation that accelerates an electric motor car, electric power is supplied to a rail car 8 from an overhead contact line (direct current overhead contact line) 1 that is a power source through a current collector 7. The electric power supplied to the rail car 8 is subjected to direct-current-to-alternating-current power conversion through a contactor 11, a semiconductor current reduction device 10, a filter reactor 9, and a power converter 6, and the motor 5 is driven by the converted alternating-current power. Wheels 3 rotate by the drive of the motor 5, and the rail car 8 goes forward. The motor 5 may be an induction motor or a permanent magnet synchronous motor, any of which is fine. In a regenerative operation that decelerates the electric motor car, the electric power flow is inverted to the electric power flow in the power running operation. That is, the motor 5 operates as a power generator, electric power is subjected to alternating-current-to-direct-current power conversion by the power converter 6, and then electric power is regenerated to the overhead contact line 1 through the filter reactor 9 and the current collector 7. Note that as an electrical ground, the negative voltage side of the power converter 6 is connected to a rail 2 through the wheel 3. Here, for the voltage of the overhead contact line 1, as an example, an embodiment will be described in which a direct current of 1,500 V is used as a power supply. The motor 5 is installed on a bogie 4, and the bogie 4 supports the rail car 8.

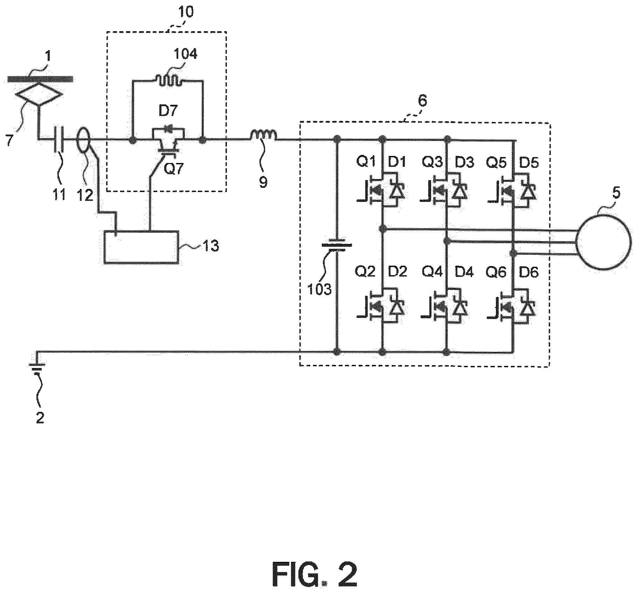

Fig. 2 is a circuit block diagram showing the overall structure of a driving device according to the first embodiment of the present invention. In Fig. 2, a driving device that drives the motor 5 includes the power converter 6. The power converter 6 includes a capacitor 103 and switching devices Q1 to Q6 as a direct-current-to-alternating-current power converter. The switching devices Q1 and Q2 are connected in series to form a U-phase, the switching devices Q3 and Q4 are connected in series to form a V-phase, and the switching devices Q5 and Q6 are connected in series to form a W-phase. To the switching devices Q1 to Q6, diodes D1 to D6 are connected in parallel such that a conduction direction is a reverse direction. Here, in the case in which the switching devices Q1 to Q6 are IGBTs, it is necessary to connect the diodes D1 to D6. However, in the case in which the switching devices Q1 to Q6 are devices having a body diode, such as a MOSFET, the body diode of the MOSFET can be used without connecting the diodes D1 to D6. A 2-in-1 device may be used in which switching devices or diodes connected in series are installed on the same package.

The power converter 6 includes the capacitor 103 that smooths direct current power obtained from the overhead contact line 1 and that removes noise. The switching devices Q1 to Q6 in the U-phase, the V-phase, and the W-phase respond to PWM (Pulse Width Modulation) control signals from a switching controller (not shown), for example, for switching operations, and thus converts the direct current power of the capacitor 103 to alternating-current powers and supplies the converted alternating-current power to the motor 5.

The power converter 6 is connected to the semiconductor current reduction device 10 through the filter reactor 9. The semiconductor current reduction device 10 is composed of a switching device Q7, an anti-parallel diode D7 of the switching device Q7, and a current decreasing resistor 104. In the switching device Q7, the emitter (electrode) is connected to the power converter 6 through the filter reactor 9, the collector (electrode) is connected to the overhead contact line 1 through a current sensor 12, the contactor 11, and the current collector 7, and the gate (electrode) is connected to the control circuit 13. This control circuit 13 is connected to the current sensor 12 and the contactor 11. The control circuit 13 is configured in which in the case in which the current sensor 12 detects a ground fault electric current, the control circuit 13 controls the switching device Q7 from on to off, and then interrupts the contactor 11. Note that in the case in which the switching device Q7 is a MOSFET, the anti-parallel diode does not necessarily have to be installed. To the switching device Q7, a cooler (not shown) is connected, and the switching device Q7 is cooled by the cooler.

Here, for example, in the case in which a ground fault occurs in the subsequent stage of the filter reactor 9 when viewed from the overhead contact line 1, a ground fault electric current occurs from the overhead contact line 1 through the filter reactor 9. The slope of this ground fault electric current that is increased with time is calculated by the division of the voltage of the overhead contact line 1 by the inductance value of the filter reactor 9 when the resistance component of the reactor or the other wire is ignored. That is, the slope of the ground fault electric current that is increased becomes steeper as the inductance value of the filter reactor 9 is smaller. At this time, although an increase in the inductance value of the filter reactor 9 can suppress a steep slope of the ground fault electric current that is increased, the filter reactor 9 is increased in size. Therefore, as the filter reactor 9, one having a small inductance value is used.

Next, the operation of interrupting this ground fault electric current using the semiconductor current reduction device 10 will be described. The on/off state of the switching device Q7 is controlled by the control circuit 13 based on the detection value of the current sensor 12 (the current value of the contactor 11) . For example, in the case in which the set value that turns off the switching device Q7 is set to 2, 000 A or more, when the detection value of the current sensor 12 is less than 2, 000 A, the control circuit 13 maintains the switching device Q7 in an ON-state, whereas when the ground fault electric current that is the detection value of the current sensor 12 is 2, 000 A or more, the control circuit 13 performs control that transitions the state of the switching device Q7 from on to off.

When the switching device Q7 is turned to the OFF-state, the ground fault electric current is carried through the current decreasing resistor 104 that is connected in parallel to the switching device Q7. This ground fault electric current is decreased by the current decreasing resistor 10. For example, it is assumed that the voltage of the overhead contact line 1 is 1,500 V and the resistance value of the current decreasing resistor 104 is three ohms, the electric current after decreased is 500 A. As a result, since the ground fault electric current is decreased from 2,000 A, at which the electric current is an electric current immediately after the ground fault occurs, to 500 A, the control circuit 13 performs control that interrupts the contactor 11, and protects an electric power substation. At this time, the contactor 11 functions as a line breaker or a circuit breaker that interrupts electric power supplied from the overhead contact line 1 to the power converter 6.

The switching devices Q1 to Q7 may be a voltage control switching device, such as a MOSFET and an IGBT, or an electric current control switching device, such as a thyristor. The diodes D1 to D7 may be a PN diode, an SBD (Schottky Barrier Diode), and the like. The switching devices Q1 to Q7 may include a plurality of types of switching devices, such as a MOSFET and an IGBT, and the base material of the semiconductor material may be SiC (Silicon Carbide) or GaN (Gallium Nitride), which are semiconductors having a band gap wider than the band gap of Si (Silicon).

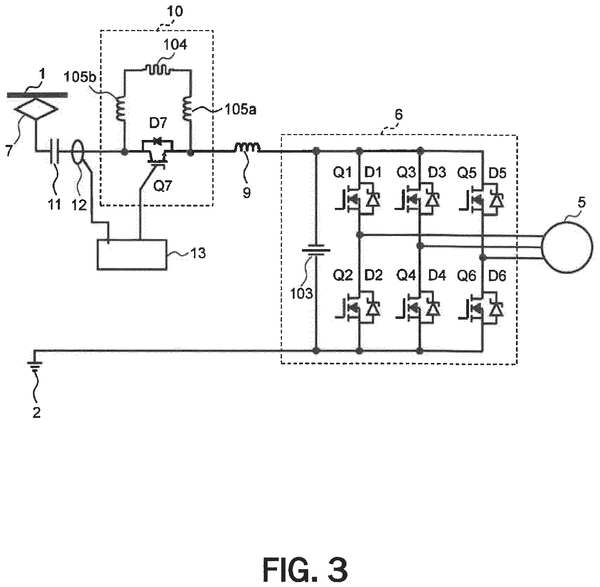

Fig. 3 is a circuit block diagram including the overall structure of the driving device and the equivalent circuit of the semiconductor current reduction device according to the first embodiment of the present invention. In Fig. 3, in connecting the current decreasing resistor 104 that is a resister in parallel to the switching device Q7 of the semiconductor current reduction device 10, it is necessary to electrically connect the switching device Q7 to the current decreasing resistor 104 using a plurality of wires. Here, on the wires, parasitic inductances 105a and 105b are present, and induced electromotive force occurs on the parasitic inductances 105a and 105b in association with a change in the electric current.

Next, the influence of the parasitic inductances 105a and 105b in the semiconductor current reduction device 10 is considered. When a ground fault occurs on a circuit that connects the power converter 6 to the rail 2 and the switching device Q7 is transitioned from the ON-state to the OFF-state, the large electric current is commutated from the switching device Q7 to the current decreasing resistor 104. In association with a change in this electric current, induced electromotive force occurs in the parasitic inductances 105a and 105b. On the current decreasing resistor 104, a voltage that is a product of the electric current and the resistance value occurs. The sum of these induced electromotive forces and the voltage on the current decreasing resistor 104 is applied across the collector and the emitter of the switching device Q7. Since the induced electromotive force is more increased as the electric current that is commutated is larger, in order to prevent the switching device Q7 from being broken, it is necessary to reduce the parasitic inductances 105a and 105b.

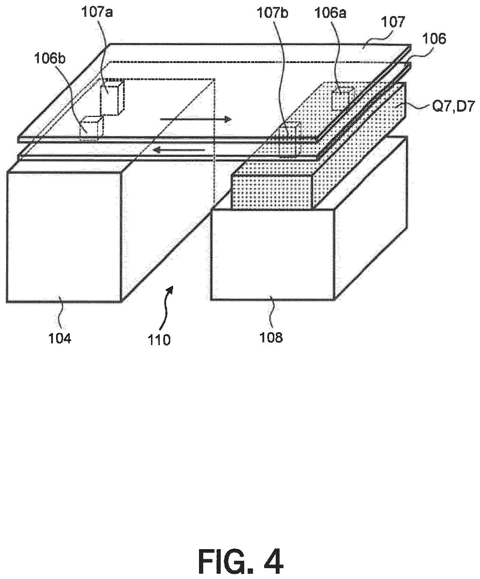

Fig. 4 is a perspective view showing the mounting structure of the semiconductor current reduction device according to the first embodiment of the present invention. In Fig. 4, the switching device Q7 that is disposed on a cooler 108 is disposed opposite to the current decreasing resistor 104 with a certain spacing. At this time, the space between the switching device Q7 and the current decreasing resistor 104 is formed as an air duct 110 that keeps the switching device Q7 apart from the current decreasing resistor 104. Above the switching device Q7 and the current decreasing resistor 104, a positive-side bus bar 106 and a negative-side bus bar 107 are disposed opposite and apart from each other. The positive-side bus bar 106 and the negative-side bus bar 107 are formed in a nearly planar shape using a copper plate member, and are configured as wires that connect the switching device Q7 to the current decreasing resistor 104.

That is, the switching device Q7 is electrically connected to the current decreasing resistor 104 using a plurality of wires. At this time, the plurality of wires is composed of the positive-side bus bar (first bus bar) 106 that is a first wire and that connects the electrode (the collector) of the switching device Q7 on the high-potential side (the high-potential side in the power running of the rail car 8) to one end of the current decreasing resistor 104 and the negative-side bus bar (second bus bar) 107 that is a second wire and that connects the electrode (the emitter) of the switching device Q7 on the low-potential side (the low-potential side in the power running of the rail car 8) to the other end of the current decreasing resistor 104, in which the positive-side bus bar 106 and the negative-side bus bar 107 are disposed opposite to each other, being stacked. The positive-side bus bar 106 and the negative-side bus bar 107 are configured in which when the switching device Q7 is transitioned from on to off, electric currents in reverse directions are carried though the positive-side bus bar 106 and the negative-side bus bar 107.

More specifically, to the back surface side of the positive-side bus bar 106, a connection terminal 106a that is connected to the collector (electrode) of the switching device Q7 is fastened and a connection terminal 106b that is connected to one end of the current decreasing resistor 104 (the high-potential side) is fastened. On the other hand, to the back surface side of the negative-side bus bar 107, a connection terminal 107a that is connected to the other end of the current decreasing resistor 104 (the low-potential side) is fastened through the through hole (not shown) of the positive-side bus bar 106 and a connection terminal 107b that is connected to the emitter (electrode) of the switching device Q7 is fastened through the through hole (not shown) of the positive-side bus bar 106. At this time, both sides (both end sides in the longitudinal direction) of the positive-side bus bar 106 are connected to the electrode (the collector) of the switching device Q7 on the high-potential side through the connection terminal 106a or to one end of the current decreasing resistor 104 through the connection terminal 106b, and both sides (both end sides in the longitudinal direction) of the negative-side bus bar 107 are connected to the electrode (the emitter) of the switching device Q7 on the low-potential side through the connection terminal 107b or to the other end of the current decreasing resistor 104 through the connection terminal 107a.

Here, when the switching device Q7 is transitioned from on to off, an electric current is carried from the connection terminal 106a to the connection terminal 106b through the positive-side bus bar 106, and this electric current is carried from the connection terminal 107a through the current decreasing resistor 104 to the connection terminal 107b through the negative-side bus bar 107. In this case, since the positive-side bus bar 106 and the negative-side bus bar 107 are stacked opposite and apart from each other, the directions of the electric current carried through the positive-side bus bar 106 and the electric current carried through the negative-side bus bar 107 are reverse to each other. Therefore, the magnetic flux due to the electric current carried through the positive-side bus bar 106 and the magnetic flux due to the electric current carried through the negative-side bus bar 107 are cancelled to each other, and the values of the parasitic inductance of the positive-side bus bar 106 and the negative-side bus bar 107 can be reduced. That is, closely disposing the positive-side bus bar 106 and the negative-side bus bar 107, through which the electric currents in the reverse orientations are carried, can reduce a magnetic field to be generated, and the parasitic inductance of the wire can be reduced. Note that the arrows in the drawing express the orientations of electric currents that are carried.

In the present structure, since the electric currents in the reverse orientations are carried even though the wire length of the positive-side bus bar 106 and the negative-side bus bar 107 are increased, the parasitic inductances of the positive-side bus bar 106 and the negative-side bus bar 107 can be reduced, and as a result, the surge voltage due to the parasitic inductance of the wire can be reduced.

On the other hand, when a large electric current of about 2,000 A is carried through the current decreasing resistor 104, heat generation occurs. The current decreasing resistor 104 can operate at a temperature of 200°C or more, whereas the operating temperature of the switching device Q7 is about 125°C. That is, it is necessary to thermally insulate the current decreasing resistor 104 from the switching device Q7. Therefore, in the first embodiment, the space between the current decreasing resistor 104 and the switching device Q7 is formed in the air duct 110 through which air is carried, and thus the current decreasing resistor 104 can be cooled by air carried through the air duct 110, and the switching device Q7, the positive-side bus bar 106, and the negative-side bus bar 107 can be cooled. That is, the distance between the current decreasing resistor 104 and the switching device Q7 is kept apart from each other, and thus the breakage of the switching device Q7 due to induced electromotive force can be prevented while thermal insulation is provided (conducting the heat of the current decreasing resistor 104 to the switching device Q7 is suppressed).

In the case in which a semiconductor material having a band gap wider than the band gap of Si is used for the switching device Q7 (e.g. SiC), the thickness of a chip that is installed on the switching device Q7 can be made thin. That is, since a conduction loss can be reduced, the cooler 108 of the switching device Q7 can be reduced in size.

In the case in which a MOSFET is used for the switching device Q7, no built-in voltage occurs unlike the IGBT, and thus the conduction loss in a low-electric current can be reduced, compared with the IGBT. As a result, the cooler 108 that cools the switching device Q7 can be reduced in size.

According to the present embodiment, the surge voltage due to the parasitic inductance of the wire that connects the switching device Q7 to the current decreasing resistor 104 can be reduced as well as the thermal insulation effect can be improved by keeping the distance between the current decreasing resistor 104 and the switching device Q7 apart.

### Second Embodiment

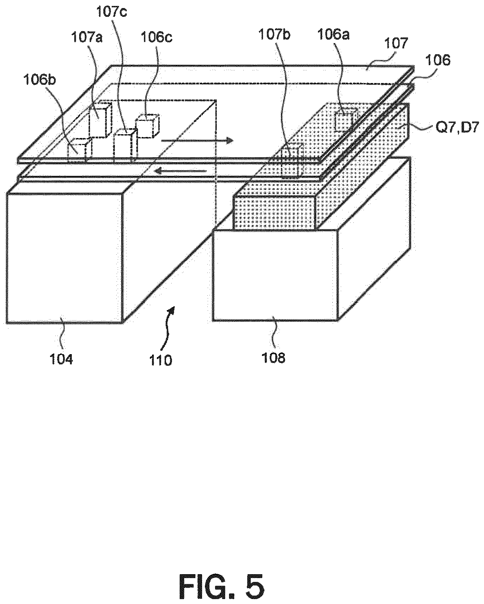

Fig. 5 is a perspective view showing the mounting structure of a semiconductor current reduction device according to a second embodiment of the present invention. In Fig. 5, the operation of a semiconductor current reduction device 10 according to the second embodiment is similar to the first embodiment, and the description is omitted.

The parasitic inductance can be more reduced as the current distributions of a positive-side bus bar 106 and a negative-side bus bar 107 that connect a current decreasing resistor 104 to a switching device Q7 are made more equal, more specifically, it is effective to make the current distributions near the connection terminals that connect the current decreasing resistor 104 to the positive-side bus bar 106 and the negative-side bus bar 107 equal.

In the present embodiment, connection terminals 106b and 106c and connection terminals 107a and 107c that respectively connect the current decreasing resistor 104 to the positive-side bus bar 106 and the negative-side bus bar 107 are disposed in a staggered configuration. That is, the connection terminals having different connection destinations (the positive-side bus bar 106 or the negative-side bus bar 107) are alternately disposed. At this time, the connection terminals 106b and 106c are fastened to the back surface side of the positive-side bus bar 106, and connected to one end of the current decreasing resistor 104 (the high-potential side). The connection terminals 107a and 107c are fastened to the back surface side of the negative-side bus bar 107 through the through hole (not shown) of the positive-side bus bar 106, and connected to the other end of the current decreasing resistor 104 (the low-potential side).

Disposing the connection terminals 106b and 106c and the connection terminals 107a and 107c in a staggered configuration achieves the effect that can make the current distributions of the positive-side bus bar 106 and the negative-side bus bar 107 near these connection terminals equal and that more reduces the parasitic inductances of the positive-side bus bar 106 and the negative-side bus bar 107. Note that a plurality of connection terminals (connection terminals including connection terminals 106a and 107b) that connects the switching device Q7 to the positive-side bus bar 106 and the negative-side bus bar 107 an also be disposed in a staggered configuration. In this case, the current distributions of the positive-side bus bar 106 and the negative-side bus bar 107 near the connection terminals including the connection terminals 106a and 107b can be mad equal, and the parasitic inductances of the positive-side bus bar 106 and the negative-side bus bar 107 can be more reduced.

According to the present embodiment, the effect similar to the first embodiment can be exerted, and the current distributions of the positive-side bus bar 106 and the negative-side bus bar 107 near the connection terminals disposed in a staggered configuration can be mad equal, and the parasitic inductances of the positive-side bus bar 106 and the negative-side bus bar 107 can be reduced more than in the first embodiment.

### Third Embodiment

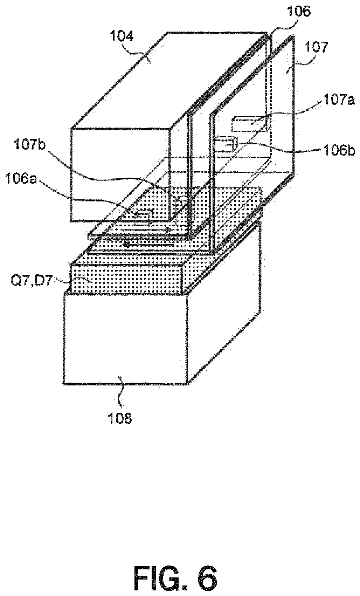

Fig. 6 is a perspective view showing the mounting structure of a semiconductor current reduction device according to a third embodiment of the present invention. In Fig. 6, a positive-side bus bar 106 and a negative-side bus bar 107 according to the third embodiment are bus bars configured in which a conductive bus bar in a planar shape (a bus bar that is equivalent to the positive-side or the negative-side bus bar according to the first embodiment) is bent at a nearly right angle at almost the center in its longitudinal direction and formed in an L-shape, and the other configurations and the operation of the semiconductor current reduction device 10 are similar to those of the first embodiment, and the description for these points is omitted.

The positive-side bus bar 106 and the negative-side bus bar 107 that connect a current decreasing resistor 104 to a switching device Q7 are stacked, and electric currents in reverse directions are carried through the positive-side bus bar 106 and the negative-side bus bar 107. Thus, the parasitic inductances of the positive-side bus bar 106 and the negative-side bus bar 107 can be reduced. Therefore, the positive-side bus bar 106 and the negative-side bus bar 107 may be bent, which are not in a linear shape (in a planar shape) . The number of bends may be twice, which is not necessarily once. Since the positive-side bus bar 106 and the negative-side bus bar 107 are bent, the switching device Q7, the following is enabled in which the current decreasing resistor 104, and the positive-side bus bar 106 and the negative-side bus bar 107 are collectively accommodated in a box or in a frame body, the box or the frame body is disposed on the inner side of the car body that is the main body of a rail car 8, and a cooler 108 is disposed on the outer side of the car body. Thus, the semiconductor current reduction device 10 can be more easily mounted on the car body than in the first embodiment. Note that also in the present embodiment, an air duct 110 can also be formed in the space between the current decreasing resistor 104 and the switching device Q7.

According to the present embodiment, the effect similar to the first embodiment can be exerted, and mounting the semiconductor current reduction device 10 is made easier than in the first embodiment.

Note that the present invention is not limited to the above-described embodiments, and includes various exemplary modifications. For example, the current sensor 12 and the control circuit 13 can also be disposed on the semiconductor current reduction device 10. A control circuit that integrates the current sensor 12 with the control circuit 13 can be configured. In this case, in the control circuit, for example, the turning on and off of the switching device Q7 is controlled based on the electric current carried through the contactor 11 (the switching device Q7 is turned on when the electric current is less than a set value, and turned off when the electric current is the set value or more), this shortens the delay time of interruption by the contactor 11, and lowering the breaking current is made possible. A device can be configured as a breaking device, including a line breaker that is disposed between a direct current overhead contact line and a power converter and that interrupts electric power supplied from the direct current overhead contact line to the power converter, a current sensor that detects the electric current carried through the line breaker, a switching device that is disposed between the line breaker and the power converter and that supplies electric power from the line breaker to the power converter when the switching device is in its on-operation, a resister that is connected in parallel to the switching device through a plurality of wires, and a control circuit that controls the switching device to be turned off from on and then controls the line breaker to be interrupted when an electric current detected by the current sensor is a set value or more. In the device, the plurality of wires includes a first wire that connects a high-potential side electrode of the switching device to one end of the resister and a second wire that connects a low-potential side electrode of the switching device to another end of the resister. The first wire and the second wire are disposed opposite to each other being stacked. Through the first wire and the second wire, electric currents in reverse directions are carried when the switching device is transitioned from on to off.

### Reference Signs List

1: overhead contact line
2: rail
3: wheel
4: bogie
5: motor
6: power converter
7: current collector
8: rail car
9: filter reactor
10: semiconductor current reduction device
11: contactor
12: current sensor
13: control circuit
Q1 to Q7: switching device
D1 to D7: diode
103: capacitor
104: current decreasing resistor
105a, 105b: parasitic inductance
106: positive-side bus bar
107: negative-side bus bar
108: cooler
110: air duct

## Claims

1. A current reduction device comprising:
a switching device (Q7) that is disposed between a line breaker configured to interrupt electric power supplied from a direct current overhead contact line (1) to a power converter (6) and the power converter (6), the switching device (Q7) being configured to supply electric power from the line breaker to the power converter (6) when the switching device (Q7) is in on-operation; and
a resister that is connected in parallel to the switching device (Q7) through a plurality of conductors,
wherein: the plurality of conductors includes
a first conductor configured to connect a high-potential side electrode of the switching device to one end of the resister, and
a second conductor configured to connect a low-potential side electrode of the switching device to another end of the resister;
**characterized in that**
the first conductor and the second conductor are disposed opposite to each other being stacked; and
through the first conductor and the second conductor, electric currents in reverse directions are carried when the switching device (Q7) is transitioned from on to off.

2. The current reduction device according to claim 1,
wherein: the switching device (Q7) and the resister are disposed apart from each other; and
between the switching device (Q7) and the resister, an air duct (110) through which air is carried is formed.

3. The current reduction device according to claim 1 or 2,
wherein: the first conductor has a first bus bar, and both sides of the first bus bar are connected to a high-potential side electrode of the switching device (Q7) or one end of the resister through one or two or more connection terminals (106a, 106b, 106c, 107a, 107b, 107c);
the second conductor has a second bus bar, and both sides of the second bus bar are connected to a low-potential side electrode of the switching device or the other end of the resister through one or two or more connection terminals (106a, 106b, 106c, 107a, 107b, 107c); and
at least one of the two or more connection terminals (106a, 106b, 106c, 107a, 107b, 107c) that are connected to the high-potential side electrode of the switching device (Q7) or one end of the resister or the two or more connection terminals (106a, 106b, 106c, 107a, 107b, 107c) that are connected to the low-potential side electrode of the switching device or the other end of the resister are disposed in a staggered configuration.

4. The current reduction device according to claim 1 or 2,
wherein: the first conductor has a first bus bar that is formed by bending at least a part of a bus bar in a planar shape, and both sides of the first bus bar are connected to the high-potential side electrode of the switching device (Q7) or one end of the resister through one or two or more connection terminals (106a, 106b, 106c, 107a, 107b, 107c); and
the second conductor has a second bus bar that is formed by bending at least a part of the bus bar in a planar shape, and both sides of the second bus bar are connected to the low-potential side electrode of the switching device (Q7) or the other end of the resister through one or two or more connection terminals (106a, 106b, 106c, 107a, 107b, 107c).

5. The current reduction device according to claim 4,
wherein at least one of the two or more connection terminals (106a, 106b, 106c, 107a, 107b, 107c) that are connected to the high-potential side electrode of the switching device (Q7) or one end of the resister or the two or more connection terminals (106a, 106b, 106c, 107a, 107b, 107c) that are connected to the low-potential side electrode of the switching device (Q7) or the other end of the resister are disposed in a staggered configuration.

6. The current reduction device according to any one of claims 1 to 5,
wherein the switching device (Q7) is configured using silicon or a semiconductor material having a band gap greater than a band gap of silicon as a base material.

7. The current reduction device according to any one of claims 1 to 6,
wherein the switching device (Q7) is a voltage drive device that is a MOSFET or an IGBT.

8. The current reduction device according to any one of claims 1 to 7, further comprising
a control circuit (13) configured to control turning on and off of the switching device (Q7) based on an electric current on the line breaker.

## Patentansprüche

1. Stromverringerungsvorrichtung, die Folgendes umfasst:
eine Schaltvorrichtung (Q7), die zwischen einem Leitungstrennschalter, der konfiguriert ist, elektrischen Strom, der von einer Gleichstromoberleitung (1) zu einem Leistungsumsetzer (6) zugeführt wird, zu unterbrechen, und dem Leistungsumsetzer (6) angeordnet ist, wobei die Schaltvorrichtung (Q7) konfiguriert ist, elektrischen Strom vom Leitungstrennschalter dem Leistungsumsetzer (6) zuzuführen, wenn die Schaltvorrichtung (Q7) im Ein-Betrieb ist; und
einen Widerstand, der zur Schaltvorrichtung (Q7) über mehrere Leiter parallelgeschaltet ist, wobei
die mehreren Leiter Folgendes enthalten:
einen ersten Leiter, der konfiguriert ist, eine hochpotentialseitige Elektrode der Schaltvorrichtung mit einem Ende des Widerstands zu verbinden, und
einen zweiten Leiter, der konfiguriert ist, eine niederpotentialseitige Elektrode der Schaltvorrichtung mit einem weiteren Ende des Widerstands zu verbinden;
**dadurch gekennzeichnet, dass**
der erste Leiter und der zweite Leiter in einem gestapelten Zustand einander gegenüber angeordnet sind und
der erste Leiter und der zweite Leiter elektrische Ströme in Rückwärtsrichtungen führen, wenn die Schaltvorrichtung (Q7) von ein zu aus umgestellt wird.

2. Stromverringerungsvorrichtung nach Anspruch 1, wobei
die Schaltvorrichtung (Q7) und der Widerstand voneinander getrennt angeordnet sind und
zwischen der Schaltvorrichtung (Q7) und dem Widerstand ein Luftkanal (110) gebildet ist, durch den Luft geführt wird.

3. Stromverringerungsvorrichtung nach Anspruch 1 oder 2, wobei
der erste Leiter eine erste Sammelschiene besitzt und beide Seiten der ersten Sammelschiene durch einen oder zwei oder mehr Verbindungsanschlüsse (106a, 106b, 106c, 107a, 107b, 107c) mit einer hochpotentialseitigen Elektrode der Schaltvorrichtung (Q7) oder einem Ende des Widerstands verbunden sind;
der zweite Leiter eine zweite Sammelschiene besitzt und beide Seiten der zweiten Sammelschiene durch einen oder zwei oder mehr Verbindungsanschlüsse (106a, 106b, 106c, 107a, 107b, 107c) mit einer niederpotentialseitige Elektrode der Schaltvorrichtung oder dem weiteren Ende des Widerstands verbunden sind; und
mindestens einer der zwei oder mehr Verbindungsanschlüsse (106a, 106b, 106c, 107a, 107b, 107c), die mit der hochpotentialseitigen Elektrode der Schaltvorrichtung (Q7) oder einem Ende des Widerstands verbunden sind, oder der zwei oder mehr Verbindungsanschlüsse (106a, 106b, 106c, 107a, 107b, 107c), die mit der niederpotentialseitigen Elektrode der Schaltvorrichtung oder dem weiteren Ende des Widerstands verbunden sind, in einer gestaffelten Konfiguration angeordnet ist.

4. Stromverringerungsvorrichtung nach Anspruch 1 oder 2, wobei
der erste Leiter eine erste Sammelschiene besitzt, die durch Biegen mindestens eines Abschnitts einer Sammelschiene in einer ebenen Form gebildet ist, und beide Seiten der ersten Sammelschiene durch einen oder zwei oder mehr Verbindungsanschlüsse (106a, 106b, 106c, 107a, 107b, 107c) mit der hochpotentialseitigen Elektrode der Schaltvorrichtung (Q7) oder einem Ende des Widerstands verbunden sind; und
der zweite Leiter eine zweite Sammelschiene besitzt, die durch Biegen mindestens eines Abschnitts der Sammelschiene in einer ebenen Form gebildet ist, und beide Seiten der zweiten Sammelschiene durch einen oder zwei oder mehr Verbindungsanschlüsse (106a, 106b, 106c, 107a, 107b, 107c) mit der niederpotentialseitigen Elektrode der Schaltvorrichtung (Q7) oder dem weiteren Ende des Widerstands verbunden sind.

5. Stromverringerungsvorrichtung nach Anspruch 4, wobei
mindestens einer der zwei oder mehr Verbindungsanschlüsse (106a, 106b, 106c, 107a, 107b, 107c), die mit der hochpotentialseitigen Elektrode der Schaltvorrichtung (Q7) oder einem Ende des Widerstands verbunden sind, oder der zwei oder mehr Verbindungsanschlüsse (106a, 106b, 106c, 107a, 107b, 107c), die mit der niederpotentialseitigen Elektrode der Schaltvorrichtung (Q7) oder dem weiteren Ende des Widerstands verbunden sind, in einer gestaffelten Konfiguration angeordnet ist.

6. Stromverringerungsvorrichtung nach einem der Ansprüche 1 bis 5, wobei
die Schaltvorrichtung (Q7) unter Verwendung von Silizium oder eines Halbleitermaterials, das eine Bandlücke besitzt, die größer als eine Bandlücke von Silizium ist, als Grundwerkstoff konfiguriert ist.

7. Stromverringerungsvorrichtung nach einem der Ansprüche 1 bis 6, wobei
die Schaltvorrichtung (Q7) eine Spannungsansteuerungsvorrichtung ist, die ein MOSFET oder ein IGBT ist.

8. Stromverringerungsvorrichtung nach einem der Ansprüche 1 bis 7, die ferner Folgendes umfasst:
eine Steuerungsschaltung (13), die konfiguriert ist, ein Ein- und Ausschalten der Schaltvorrichtung (Q7) auf der Grundlage eines elektrischen Stroms im Leitungstrennschalter zu steuern.

## Revendications

1. Dispositif de réduction de courant comprenant :
un dispositif de commutation (Q7) qui est disposé entre un disjoncteur de ligne configuré pour interrompre une puissance électrique alimentée depuis une ligne de contact aérienne en courant continu (1) jusqu'à un convertisseur de puissance (6) et le convertisseur de puissance (6), le dispositif de commutation (Q7) étant configuré pour alimenter une puissance électrique depuis le disjoncteur de ligne jusqu'au convertisseur de puissance (6) quand le dispositif de commutation (Q7) est dans une opération de marche ; et
une résistance qui est connectée en parallèle au dispositif de commutation (Q7) via une pluralité de conducteurs,
dans lequel : la pluralité de conducteurs incluent
un premier conducteur configuré pour connecter une électrode latérale à haut potentiel du dispositif de commutation à une extrémité de la résistance, et
un second conducteur configuré pour connecter une électrode latérale à faible potentiel du dispositif de commutation à l'autre extrémité de la résistance ;
**caractérisé en ce que**
le premier conducteur et le second conducteur sont disposés en opposition l'un à l'autre en étant empilés ; et
via le premier conducteur et le second conducteur, des courants électriques dans des directions inverses sont transportés quand le dispositif de commutation (Q7) passe de marche à arrêt.

2. Dispositif de réduction de courant selon la revendication 1,
dans lequel : le dispositif de commutation (Q7) et la résistance sont disposés à distance l'un de l'autre ; et
entre le dispositif de commutation (Q7) et la résistance, un conduit d'air (110) à travers lequel de l'air est transporté est formé.

3. Dispositif de réduction de courant selon la revendication 1 ou 2,
dans lequel : le premier conducteur a une première barre omnibus, et les deux côtés de la première barre omnibus sont connectés à une électrode latérale à haut potentiel du dispositif de commutation (Q7) ou à une extrémité de la résistance via une ou deux ou plusieurs bornes de connexion (106a, 106b, 106c, 107a, 107b, 107c) ;
le second conducteur a une seconde barre omnibus, et les deux côtés de la seconde barre omnibus sont connectés à une électrode latérale à faible potentiel du dispositif de commutation ou à l'autre extrémité de la résistance via une ou deux ou plusieurs bornes de connexion (106a, 106b, 106c, 107a, 107b, 107c) ; et
l'une au moins des deux ou plusieurs bornes de connexion (106a, 106b, 106c, 107a, 107b, 107c) qui sont connectées à l'électrode latérale à haut potentiel du dispositif de commutation (Q7) ou à une extrémité de la résistance, ou les deux ou plusieurs bornes de connexion (106a, 106b, 106c, 107a, 107b, 107c) qui sont connectées à l'électrode latérale à faible potentiel du dispositif de commutation ou à l'autre extrémité de la résistance sont disposées dans une configuration étagée.

4. Dispositif de réduction de courant selon la revendication 1 ou 2,
dans lequel : le premier conducteur a une première barre omnibus qui est formée en incurvant au moins une partie d'une barre omnibus dans une forme planaire, et les deux côtés de la première barre omnibus sont connectés à l'électrode latérale à haut potentiel du dispositif de communication (Q7) ou à une extrémité de la résistance via une ou deux ou plusieurs bornes de connexion (106a, 106b, 106c, 107a, 107b, 107c) ; et
le second conducteur a une seconde barre omnibus qui est formée en incurvant au moins une partie de la barre omnibus dans une forme planaire, et les deux côtés de la seconde barre omnibus sont connectés à l'électrode latérale à faible potentiel du dispositif de commutation (Q7) ou à l'autre extrémité de la résistance via une ou deux ou plusieurs bornes de connexion (106a, 106b, 106c, 107a, 107b, 107c).

5. Dispositif de réduction de courant selon la revendication 4,
dans lequel l'une au moins des deux ou plusieurs bornes de connexion (106a, 106b, 106c, 107a, 107b, 107c) qui sont connectées à l'électrode latérale à haut potentiel du dispositif de commutation (Q7) ou à une extrémité de la résistance ou les deux ou plusieurs bornes de connexion (106a, 106b, 106c, 107a, 107b, 107c) qui sont connectées à l'électrode latérale à faible potentiel du dispositif de commutation (Q7) ou à l'autre extrémité de la résistance sont disposées dans une configuration étagée.

6. Dispositif de réduction de courant selon l'une quelconque des revendications 1 à 5,
dans lequel le dispositif de commutation (Q7) est configuré en utilisant du silicium ou un matériau semi-conducteur ayant une bande interdite plus grande qu'une bande interdite de silicium comme matériau de base.

7. Dispositif de réduction de courant selon l'une quelconque des revendications 1 à 6,
dans lequel le dispositif de commutation (Q7) est un dispositif pilote de tension qui est un MOSFET ou un IGBT.

8. Dispositif de réduction de courant selon l'une quelconque des revendications 1 à 7, comprenant en outre
un circuit de commande (13) configurée pour commander une activation et une désactivation du dispositif de commutation (Q7) sur la base d'un courant électrique sur le disjoncteur de ligne.
